# EUROPEAN PATENT APPLICATION

(11) **EP 3 835 865 A1**
(43) Date of publication of application: **16.06.2021**
(21) Application number: 19798888.4
(22) Date of filing: 24.04.2019
(51) Int. Cl.: G03B 17/56, A42B 3/04, F16M 13/02

(54) **CLAMP SUPPORT FOR MOUNTING A CAMERA ON HELMETS**

(30) Priority: 10.05.2018 ES 201800281 U
(71) Applicant: Rueda Perez, Diego, 28026 Madrid (ES)
(72) Inventor: Rueda Perez, Diego, 28026 Madrid (ES)
(74) Representative: Herrero & Asociados, S.L.
(86) International application number: PCT/ES2019/070279
(87) International publication number: WO 2019/215357

(57) **Abstract**

This fastening system for action cameras and accessories allows them to be attached to helmets without the need to use any adhesive or fastening system attached to the helmet. The pressure fixing system makes it possible to achieve a rigid positioning system that is easy to attach and remove depending on the user's use.

The clamp-type support system includes a plate (1) and a support arm (2) which are joined by screws (81) and (82). It allows a rigid connection between the inner (31) and outer (32) faces of the helmet without the need for adhesives.
This system allows the support to be fitted and removed, leaving the hull completely without any additional fastening system.
At the end of the bracket (2) there is a connection system (21) which allows the action chambers (5) to be fitted by means of the screw fittings (6) and (22), as well as being able to fit other additional accessories (4).

## Description

### TECHNICAL SECTOR

This invention is referred to register a bracket clamp to fix the action cameras in the helmets without adhesives.
The purpose of this application is to register a bracket clip that incorporates a series of advantages over the current fastening systems used for this purpose.
It is known that most sports where cameras are used, these are placed on the helmet using adhesives or strap systems. When the user wishes to remove the part that fix the camera by means of adhesive, he finds himself with a limitation, as it is attached when the device is taken off, he can take the silk-screen printing of the helmet with him and as it is for a single use, the user finally leaves the device attached to the helmet, even though he is not using it.
The present invention comes to solve said problem by establishing an attachment of the camera without using adhesives and reusable, thus, preventing users from damaging their helmets and being able to completely remove the accessory in case it is not used.

There are devices for fastening to the helmet that reflect the state of the art related to it. Below are the references of some of them:
The document "US20150177597A1" refers to an adhesive bracket with a clip-on system that uses double-sided tape to stay attached to the helmet. The document "US9737104B1" refers to a system of fixing by means of adhesive on a helmet.
However, the function of the devices described does not meet the main appeal of this new method of attachment without adhesive.

This bracket in the form of a vindicated clamp is made up of two principal pieces, the first of which is a piece in the shape of a slightly curved plate to accompany the shape of the interior of the helmet and thus exert a greater contact surface with it. This piece is placed inside the helmet, between the padded interiors (if the helmet has them) and the exterior.

The second piece is the one that gives body to the invention once it is fixed with the first piece. This piece is placed outside the helmet. When both pieces have been placed in the helmet, it forms a rigid body that allows a camera to be held in total security.

The external bracket has at its end an area for attaching the camera or accessories for its correct positioning.

In the drawings:

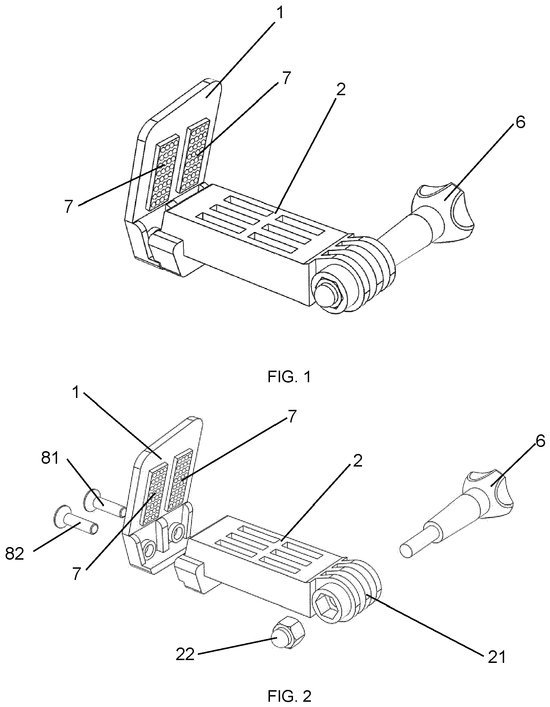

Fig. 1 Correspond to isometric views of the set of elements mounted and ready to be placed on the helmet. Part (1) corresponds to the clip which is inserted into the internal face of the helmet (31), the rubber parts (7) are attached to the plate (1). The piece (2) corresponds to the main bracket, at the end of which the chambers and accessories are placed, as well as the joining elements (6).
Fig. 2 Corresponds to an isometric exploded view of the assembly, unlike fig 1, we can see the screws (81) and (82) used as connection elements between the clip (1) and the bracket (2). At the end we find the fixing system (6) and a nut (22).
Fig. 3 Corresponds to an isometric view of the bracket placed on the helmet (3). At the end of the bracket (2) there is an action chamber (5).
Fig. 4 corresponde a una vista frontal del conjunto, en esta vista Podemos observer el detalle de la sujeción mediante presión en el casco (3), creado por la pletina (1) y el soporte (2). En el extremo del soporte (2) localizamos un accesorio (4) para colocar la cámara de acción (5) en una disposición distinta a la de la figura 3.

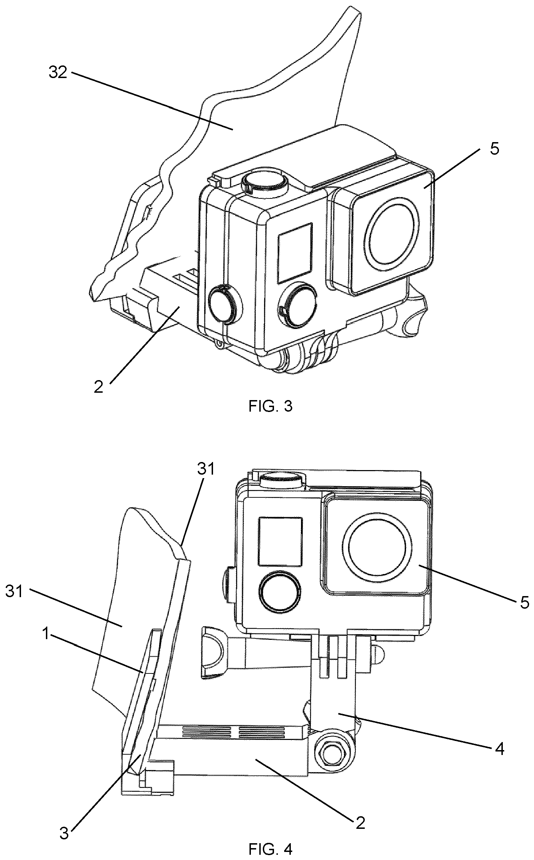

Fig. 4 Corresponds to a frontal view of the assembly, in this view we can see the detail of the fastening by pressure on the helmet (3), created by the plate (1) and the bracket (2). At the end of the bracket (2) we can find an accessory (4) to place the action chamber (5) in a different arrangement from that shown in fig. 3.

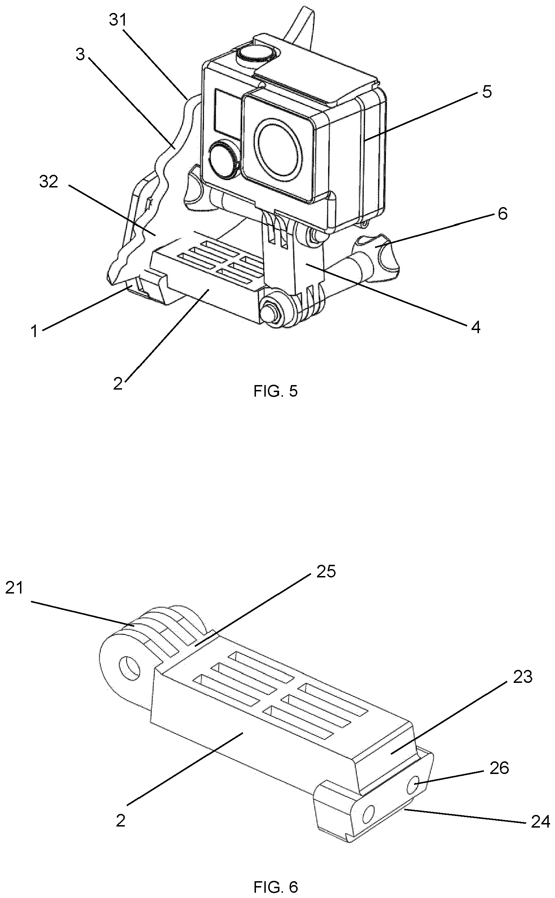

Fig. 5 corresponds to a perspective view of the invention placed on the helmet (3). The plate (1) creates pressure on the inner face (31) of the helmet (3) and the bracket (2) creates pressure on the outer face (32) of the helmet (3). It has the same arrangement and assembly as shown in fig. 4.
Fig. 6 corresponds to an isometric view of the bracket (2), where we can highlight an area with a slope (23) to improve contact with the outside of the helmet (32), a recess (24) to facilitate mounting with the plate (1), a grooved area (21) where the accessories and action chambers are placed. The lowered area (25) facilitates positioning and the accessories and cameras to increase the angle of their position. The screws (81) and (82) are used to join the plate (1) with the holes (26).

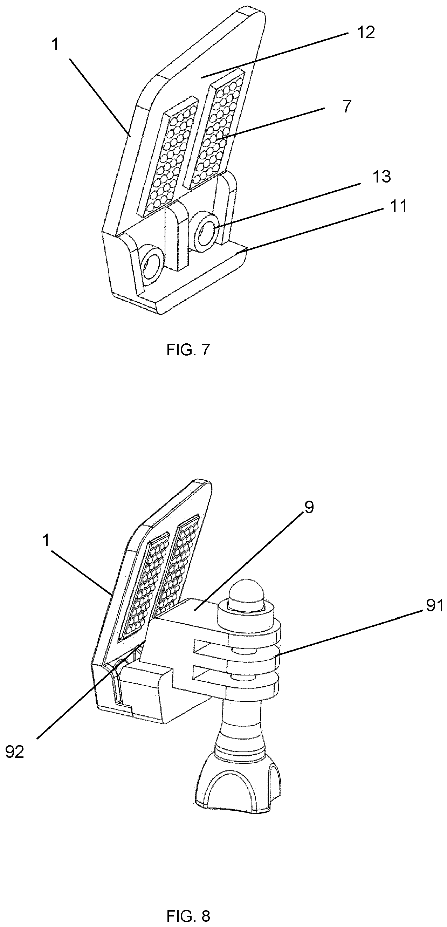

Fig. 7 corresponds to an isometric view of the plate (1), the external face of the plate (12) is in contact with the inner face of the helmet (31). The step (11) serves to facilitate mounting with recess step (24) of the bracket (2). We have located grip-enhancing elements (7) which are rubber elements attached to the plate (1). Finally, the screws (81) and (82) are placed in the area (13) to make the union with the holes (26) of the bracket (2).

Fig. 8 corresponds to an isometric view of the system, where the bracket (2) has been replaced by another bracket (9) with a different size and arrangement of the accessories connection area (91). As it is arranged to match the original. The bracket (9) maintains the rest of the characteristics in front of the bracket (2), including the support area (92) with the helmet.

### PREFERENTIAL REALIZATION OF THE INVENTION

As an example, a case of practical realization of the clamp bracket for placing cameras in helmets without adhesives and object of this patent is represented.

Following the drawings, the clamp (1) and the lateral bracket (2) can be seen, forming a rigid piece when they are joined together and remain by tightening the helmet (3) by means of joining accessories (81) and (82).

At the end of the lateral bracket (21) there is an extension accessory (4) that holds the action chamber (5) and through the joint accessories (6) and (22) everything is perfectly assembled.

In order to create the formation of a rigid body of the invention and to be perfectly fastened to the helmet (3), the clamp (1) and the bracket (2) are joined with joining elements (81) and (82), the external face of the support (23) tightens the external face of the helmet (32) and the face of the plate (12) exerts pressure on the internal face of the helmet (31). together with the anti-slip elements (7) exert pressure on the internal face of the helmet (31).

## Claims

1. Action chamber clip holder designed to be attached to the helmet shell, without the need to use adhesives in their placement. The basic elements that compose the invention are: clamp (1) and a lateral support (2), creating a rigid body to fix in the helmet using the pressure of the joint with the screws (81) and (82), furthermore in whose of the end (21) different accessories are placed (6) and (22) to be able to carry out the placement of the own action camera (5).

2. Clamp bracket for placement of action cameras according to claim 1 characterized because the placement the invention in the helmet (3) between the external face (32) and the internal face (31). It is made without the use of adhesives. The clip (1) is placed on the inside of the shell (3) and through a rectangular non-slip area (7) prevents sliding inside the shell (3), in addition, the inner face of the clip (12) rests on the internal face of the helmet (31). It also has an area (11) to facilitate its placement and some holes (13) to place the fasteners elements (81) and (82).

3. Clamp bracket for placement of action chambers according to of the claims 1 and 2 **characterized by** the lateral support (2) rests on the outside of the external face of helmet (32) having a flat part (23) where it supports intended to make pressure in the helmet (3) and improve the area to make pressure. The support (2) has connection points (26) for connection to the clip (1)

4. Clamp bracket for placing action cameras according to any of the claims 1,2 and 3 **characterized by** the rigid body that forms the clamp (1) and lateral support (2) when placed between the helmet (3) and its union is made by means of the fixations (81) and (82), making pressure between the surface (23) of the lateral support (2) and improving the grip with the rubbers (7) in the clamp (1) to make a safety rigid body.

5. Clamp bracket for placing action cameras according to any of the claims 1,2,3 and 4 characterized the lateral bracket (2) having a support area (23) that rests on the helmet (3). It has a zone (24) to ensure the centering with the clamp (11). At the end it has a lowered area (25) to allow a greater range of rotation of the camera (5) or the accessory (4).

6. Clamp bracket for placing action cameras according to any of the claims 1,2,3,4 and 5 characterized, we can have different configurations for the bracket (2), for example the perpendicular and compacted form (9) and the same mode have a sloped area (92). Arrangement of a lateral support (9) to hold accessories (91) in horizontal configuration.
